(19) Europäisches Patentamt
European Patent Office
Office européen des brevets

(11) **EP 2 161 689 A1**

(12) **EUROPEAN PATENT APPLICATION**

(43) Date of publication:
**10.03.2010 Bulletin 2010/10**

(51) Int Cl.:
***G06T 7/00*** (2006.01)

(21) Application number: **09169529.6**

(22) Date of filing: **04.09.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(30) Priority: **04.09.2008 EP 08015612**

(71) Applicant: **Mattes, Julian**
**4232 Hagenberg (AT)**

(72) Inventors:
• **Mattes, Julian**
**4232 Hagenberg (AT)**
• **Gall, Johannes**
**4073 Wilhering (AT)**

(74) Representative: **Betten & Resch**
**Patentanwälte**
**Theatinerstrasse 8**
**80333 München (DE)**

(54) **Registration and visualization of image structures based on confiners**

(57) A method for registration of image structures is provided which comprises the steps of providing a source image and a target image each comprising a plurality of pixels, wherein each pixels has a gray value, defining at least one gray value level, determining one or more first regions in the source image for each gray value level as confiners, wherein the first region comprises pixels having gray intensities equal to or higher than the gray value level, selecting one of the one or more determined first regions, determining second regions in the target image which are equal to the selected first regions, calculating the mass of each determined second region by forming the sum of the gray intensities of all pixels of the determined second region, and determining the maximum of the calculated masses and selecting the second region having the maximum mass as corresponding to the first region in the target image.

Fig. 1

**Description**

<u>Related Application</u>

This application claims priority from EP patent application No. 08015612.8 filed on September 4, 2008 and entitled "Registration and Visualization of Image Structures Based on Confiners" which is incorporated herein by reference.

<u>Field of the Invention</u>

The present invention is generally related to image-to-image and/or template-to-image registration, particularly to registration and visualization of image structures based on confiners and more particularly to a method and apparatus for registration of image structures.

<u>Background of the Invention</u>

Image registration is defined as the process of determining the spatial transformation relating physically or anatomically corresponding points in two images or to bring them together as close as possible for a given class of transformations. Registration of a contour to a 2D image or of a surface to a 3D image is defined in the same way but only the points on the contour or surface have to be related, or brought together as close as possible, by the spatial transformation to the physically or anatomically corresponding points in the 2D or 3D image. If the contour or surface are extracted from an image the point correspondences obtained by contour/surface-to image registration for the contour or surface points must be the same as those obtained by image-to-image registration.

Registration has a large number of applications, for instance, to bring different images of the same object/ person into the same reference system, to compare anatomically corresponding objects of different subjects, or to determine the motion appearing from one image to the next one within a time series. Hence, tracking systems can also be based on image registration. Various methods for rigid and non-rigid image registration have been proposed during the past 20 years (see, for instance, B. Zitova and J. Flusser: Image registration methods: a survey, Elsevier. Image and Vison Computing 21, 2003, pp. 977-1000). Many of them are using an iterative process to transform one image onto the other and define a similarity measure assessing at each iteration, how well the fixed and the transformed image are resembling.

These methods differ among others with respect to the image features which are used to define the similarity measures. So-called iconic measures compare gray intensity values directly. An example is the mutual information measure which has been widely used in different fields of applications (cf. Pluim, Maintz, & Viergever, 2003, Mutual Information Based Registration of Medical Images: A Survey. IEEE Tr. Med. Im., 22, S. 986-1004). On the other hand, there are methods comparing previously extracted features which can be defined at different levels, for instance, by incorporating gradient information or by using unconnected edges or, at a high level, segmented objects.

An example for features at an intermediary level are called blobs (also called components, or confiners), the connected image regions obtained after thresholding, and their contours or surfaces, the iso-lines or -surfaces. These regions can be efficiently extracted and different approaches have been proposed to identify corresponding (physically or anatomically) blobs in both images (Kok-Wiles, Brady, & Highnam, 1998, Comparing mammogram pairs for the detection of lesions. 4th Int. Workshop of Dig. Mammography. Nijmegen, Netherlands: Kluwer; Mattes & Demongeot, 1999, Tree representation and implicit tree matching for a coarse to fine image matching algorithm. MICCAI 99. 1679, S. 646-655. Cambridge, UK: Springer-Verlag) and to base the registration process on them. However, small differences in both images (e.g., because of noise) often lead to considerable changes of the blobs of the respective images, even though parts of them may still correspond. Therefore, often only very few (or no) well corresponding blobs can be detected.

<u>Summary of the Invention</u>

Broadly, the invention utilizes image processing techniques and addresses the problem of image-to-image and template-to-image registration wherein the template is a contour or a 2D region in case of a 2D image or a surface or a 3D region in case of a 3D image.

We call source image the image which is transformed or from which the contour or surface, respectively, is extracted and we call target *image* the image which remains fix or onto which the contour or surface is transformed. If a region (2D or 3D) shall be registered to an image, then the contour or surface points of the region play the same role as the contour or surface points mentioned before.

We call an image section a set of pixels of the image, i.e., a set of image points together with their grey-level,

It is an object of the invention to avoid the problems associated with the identification of corresponding blobs, in particular associated to previous approaches looking for corresponding confiner pairs, which are sensitive to differences in both images due to noise or different conditions of image acquisition.

It is a further object of the invention to provide an image registration process with high accuracy and robustness with respect to image differences, e.g. due to noise or different conditions of image acquisition, In particular, it is an object of the present invention to provide an image registration method which is able to deal with large local movements of image movements. More particularly, it is an object of the present invention to provide image registration techniques which are simple to implement and can be implemented with high computational speed.

To avoid the problems associated with the identification of corresponding blobs the invention proposes to set the registration task as a hierarchical contour-to-image template matching problem and by defining a new similarity metric for contour- (or region-) to-image matching. The proposed similarity measure is based on a maximal mass confinement principle. This measure and strategy lead to a simple but efficient method not only for contour-to-image matching but also for rigid and locally rigid image registration usually able to cope with large local movements.

According to an aspect of the present invention, there is provided a method and an apparatus as well as a computer program and an electronic storage medium as defined by the independent claims.

Basically, the invention provides to set the problem of image registration as a contour/region-template-to-image matching problem using so-called confiners -- also called blobs or components -- as template regions, to select the confiners of one of the images by passing through the hierarchical structure which they define and registering them successively rigidly form coarse-to-fine to the other image, the target image, and to use a maximum mass confinement (MMC) principle for contour-to-image registration. This principle allows to derive a similarity measure assessing how well the confiner fits into the target image simply by calculating the gray value mass confined by its contour. By optimizing this measure for rigid transformations a MMC algorithm registering a contour locally rigid to the target image is obtained. According to this principle of the invention, problems can be avoided which were related to previous registration algorithms based on confiners.

In accordance with an aspect of the invention, a method for registration of one or several closed lines onto a 2D target image is provided, wherein the closed line(s) is (are) the contour(s) of one or several confiner(s) extracted from a source image, and the registration is achieved by the minimization of a cost functional which contains as one of its terms, or as its only term, a dissimilarity measure which is a function of the contour(s) of a. and of the target image but which is not solely calculated based on an associated confiner contour of the target image, or of one or several sections of the target image.

In accordance with another aspect of the invention, the method for the registration is further characterized that one or several closed surfaces and a 3D target and a 3D source image are used instead of one or several closed lines and 2D target and source images, respectively, or one or several 2D regions are used instead of the closed lines and the 2D region(s) is (are) confiner(s) of the source image, or one or several 3D regions and 3D target and source images are used instead of the contour(s) and 2D images, respectively, and the 3D region(s) is (are) confiner(s) of the source image or that the contour(s)/surface(s) are not confiners of a source image but contour(s)/surface(s) constructed with the aim to approximate, or to correspond to, one (several) confiner(s) in the target image or a part of this.

In accordance with another aspect of the invention, the method for registration further comprises that the functional is maximized and a similarity measure is used instead of a dissimilarity measure and, in particular, wherein this similarity measure to be maximized is defined as the mass in the target image of the region enclosed by the contour (s)/surface(s) to be registered to the target image, wherein the contours are in the position after the transformation related to the respective current step of the registration process.

In accordance with another aspect of the invention, the method for registration further comprises that one or several regions are registered to the target image instead of contours or surfaces and wherein the region(s) for which the mass in the target image is calculated, as similarity measure to be maximized, is the region to be registered itself in the position after the transformation related to the respective current step of the registration process, eventually after being adapted to match to the image pixel raster.

In accordance with another aspect of the invention, the method for registration further comprises that the contours/surfaces/regions of different confiners in the source image are registered independently from each other - but their respective initial position in the registration process might depend on the position of the contours/surfaces/regions of other confiners, in particular on their respective position after registration of these other confiners - and wherein for each contour its own cost functional and similarity or dissimilarity measure is used.

In accordance with another aspect of the invention, the method for registration further comprises that a source image is registered onto a target image and wherein the contour(s)/surface(s)/region(s) to be registered in are given by one or several confiners of the source image and wherein the source image is transformed according to a transformation calculated from the transformation(s) obtained by the registration of this/these contour(s)/surface(s)/region(s).

In accordance with another aspect of the invention, the method for registration further comprises that the confiner(s) are selected successively and hierarchically from the confinement tree of the source image, from its root down to its leaves, and wherein the confinement tree has usually been loped, and wherein the registration of each selected confiner is initialized by the registration result obtained for that confiner, among the other selected ones, which contains it and which is at the highest gray level among all other selected ones containing it.

In accordance with another aspect of the invention, the method for registration further comprises that a common rigid or non-rigid transformation model and a common cost functional is used to register several confiners, and, in particular, wherein this non-rigid transformation model is volume preserving in the case of 3D images or area preserving in the case of 2D images.

In accordance with another aspect of the invention, the method for registration further comprises that ranges of consecutive gray levels are considered and wherein for each such range a common transformation model and cost functional is used for all selected confiners in the considered range and wherein the registration process for a given range is initialized by the transformation obtained for the previous range with lower gray values.

In accordance with another aspect of the invention, the method for registration further comprises that the ranges of consecutive gray levels are defined such that it does not happen that one of two selected confiners which are within a same range is contained into the second one.

In accordance with another aspect of the invention, the method for registration further comprises that, instead of several confiners, the whole level section for a given level, or an approximation of it, is used, and, in particular, wherein the similarity measure maximizes the mass in the target image of the level section in the position after the transformation related to the respective current step of the registration process, eventually after being adapted to match to the image pixel raster.

In accordance with another aspect of the invention, the method for registration further comprises that, instead of the whole level section for a given level, the union of all confiners of the loped tree at this level is used.

In accordance with another aspect of the invention, the method for registration further comprises that in the usually loped confinement tree for each branch starting from the node after a bifurcation until the next node with several children in the tree only one single confiner is selected for registration.

In accordance with another aspect of the invention, the method for registration further comprises that for each branch starting from the node after a bifurcation until the next node with several children in the tree the confiner which is selected has the highest ratio "area/(contour length)" in 2D or "volume/(surface area)" in 3D among the confiners on the described part of this branch.

In accordance with another aspect of the invention, the method for registration further comprises that, during the registration process, the step size of the optimizer, which optimizes the cost functional, is smaller the smaller the area, in case of 2D images, or the volume, in case of 3D images, of the considered confiner(s) is.

In accordance with another aspect of the invention, the method for registration further comprises the steps of calculating and/or visualizing the confiner, or an approximation of it, with smallest area, in case of a 2D image, or volume, in case of a 3D image, among all confiners of the eventually loped confinement tree, which contain a given interactively or automatically determined point, with the option to highlight the node in the tree corresponding to this confiner.

Brief Description of the Drawings

These and other features, aspects, and advantages of the present invention will become better understood with reference to the following description and accompanying drawings, which should not be read to limit the invention in any way, in which:

Fig. 1 is a flowchart describing a method for registering image structures with a hierarchical image registration according to an exemplary embodiment of the invention;

Fig. 2 is a flowchart describing in more detail the step of registering the contour to the target image in the method as illustrated in Fig. 1 according to an exemplary embodiment of the invention;

Figs. 3a-3c illustrate the definition of the confiners (Fig. 3a), the confinement tree (Fig. 3b), and the confinement variational principle (Fig. 3c);

Fig. 4 shows the comparison of the registration results obtained with MMC and with NMI template matching for 100 different initializations of the registration process;

Fig. 5 shows microscopic cell images at two different points in time ((a) and (b)/(c));

Fig. 6a shows a confinement tree of the source image shown in Fig. 4;

Fig. 6b shows a target image and contours corresponding to the last arrows before the leaves in the tree in Fig. 6a;

Fig. 6c shows the green contours which are those indicated by the arrows in the tree in Fig. 6a when transformed with the transformation obtained by registering the largest contour - of the confiner selected at first by the algorithm -- to the target image; the yellow contour shows the result of registering the corresponding green contour with the target image.

## Detailed Description of the Embodiments of the Invention

The described exemplary embodiments are intended to assist in the understanding of the invention and are not intended to limit the scope of the invention in any way.

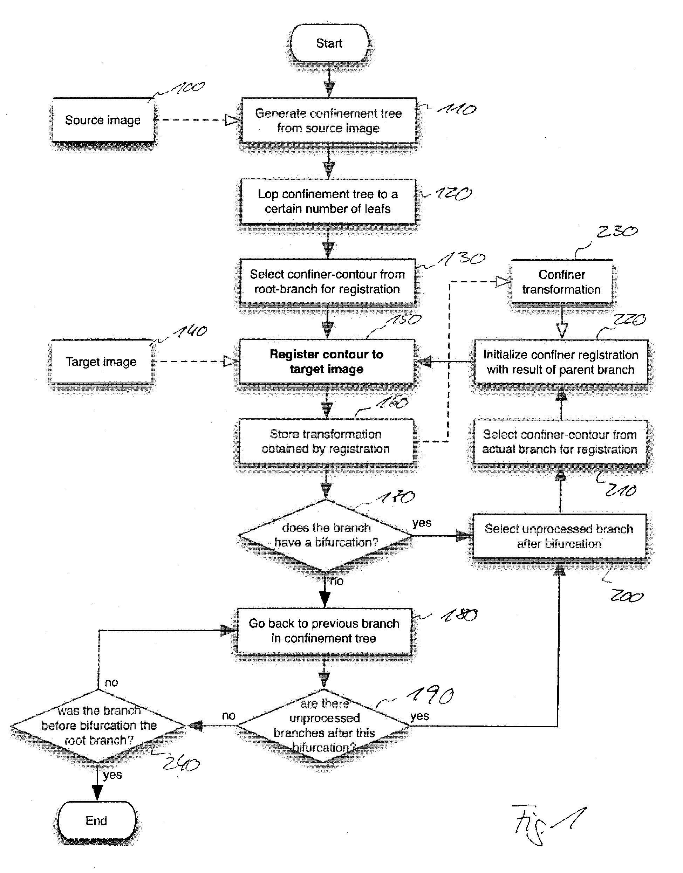

Figure 1 is a flow chart describing the principle steps of a method for registering image structures according to an embodiment of the invention. The confinement tree is generated as it will be described in more detail below in step 110 from a source image 100. The confinement tree is loped to a certain number of leaves in step 120. From the route branch of the confinement tree a confiner contour is selected for registration in step 130. The contour is then registered to a target image 140 in step 150. According to an embodiment, the region of the registered contour has an area corresponding to a respective region in the source image. If for example both the source image and the target image have the same dimension, the region of the registered contour has the same or nearly the same area as the respective region in the source image The transformation result obtained by the registration is stored in step 160 and may be further used in the confiner transformation step 230. In step 170 it is then determined whether the present branch has a bifurcation. If this is the case, the method branches to step 200 to select an unprocessed branch after the bifurcation. The confiner contour from the actual branch is then selected for registration in step 210. Next, the confiner registration is initialized with the result of the parent branch using the confiner transformation from step 230 (step 220). If the current branch does not have a bifurcation (step 170), the method branches to step 180 going back to previous branch in the confinement tree. In step 190 it is then determined whether there are other unprocessed branches after the present bifurcation and if this would be the case, the method branches to step 200. If this is not the case, step 190 branches to step 240 where it is determined whether the branch before bifurcation was the route branch. If this is the case, the process is terminated. If this is not the case, the method branches back to step 180.

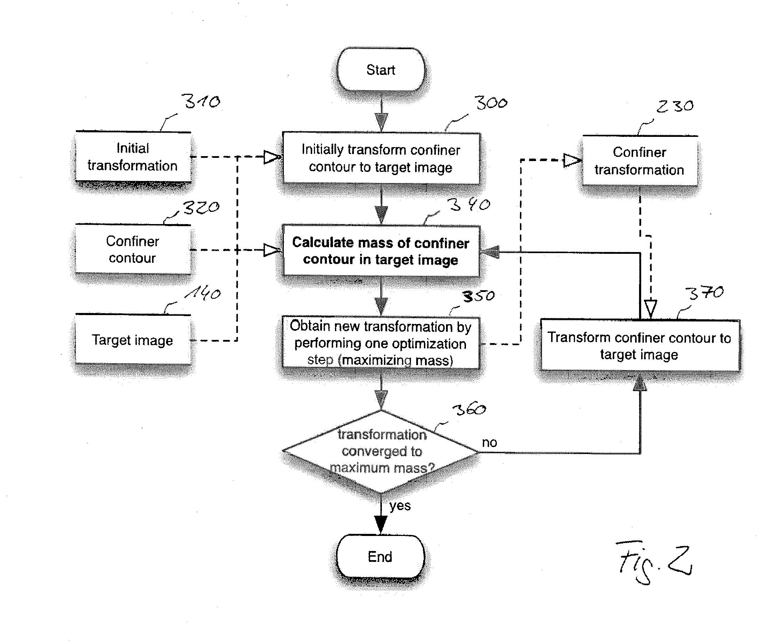

Figure 2 illustrates in more detail how the contour is registered to the target image (step 150 in Figure 1). In step 300 the confiner contour is initially transformed to the target image 140, and initial transformation information 310. Then, in step 340 the mass of the confiner contour in the target image is calculated using the confiner contour 320. The new transformation is then obtained by performing an optimization step, e.g. maximizing the confiner mass, in step 350 and stored as confiner transformation 230. In step 360 it is then determined whether the transformation is converged. If this is the case, the contour to a target image registration is terminated. If this is not the case, the process branches to step 370 in which the confiner contour is further transformed to the target image based on the confiner transformation information from step 230 and the transformed confiner contour is then again used in step 340 to calculate the confiner mass in the target image.

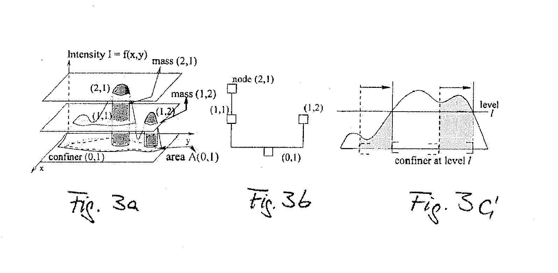

Next, maximal mass confinement for template-to-image registration will be described. Referring to Figs. 3a to 3b, the principle for region- (or contour-/surface-) to-image registration, from which an image registration algorithm is derived will be described. The principle follows from a property of the so-called level sections (or cross sections) of an image and of its connected components. Figure 3a shows an illustration of the definition of the confiners, Fig. 3b the confinement tree, and Fig. 3c the confinement variational principle. By moving the region delimited by the dotted brackets in as shown in Fig. 3c onto the confiner position (solid brackets) the mass corresponding to the gray area on the left hand side is lost and that on the right hand side is gained.

Given the intensity function $f_I{:}\mathbf{R}^d \to \mathbf{R}_{\geq 0}$, $d = 2$ or 3 of an image $I$ a *confiner* (or blob) is formally defined as a maximal connected subset (i.e., a connected component) $C$ of the *level section* $\mathcal{L}_l = \mathcal{L}(f_I)_l = \left\{ x \in \mathbf{R}^d \mid f_I(x) \geq l \right\}$

at a gray level $l$ (Fig. 3(a)). Connectivity is further defined through the discrete $d4$-neighborhood. Then, to each confiner it is associated its mass as an attribute inspired by measure theory; it is calculated as the sum of the gray values of the confiner's pixels (Fig. 3(a)). Taken for the level sections at different gray levels (including level 0) the confiners form by set inclusion a tree structure, the confinement tree (Fig. 3(b)). In practical applications the confinement tree is usually loped, i.e., some of its nodes are removed according to certain criteria on their attributes, for instance if their mass or their area is too small.

Next, mass based similarity measure and the maximal mass confinement principle will be described. For a given integrable function $f{:}\mathbf{R}^d \to \mathbf{R}_{\geq 0}$, $d=2$ or 3 in our case, a measure S is defined which associates to each *measurable* subset $\mathcal{B}$ of the space $\mathbf{R}^d$ (i.e., the integral of $f$ over $\mathcal{B}$ exists) its mass $m_\mathcal{B}$ defined as the integral of $f$ over $\mathcal{B}$ ,

hence $S(\mathcal{B}) = m_{\mathcal{B}} = \int_B f\, dV$ ($dV = dxdy$, $f = f(x,y)$ if $d = 2$ or $dV = dxdydz$, $f = f(x,y,z)$ if $d=3$). If $f = f_I$ is the gray intensity of an image $I$ then $\mathcal{B}$ is a set of pixels (or voxels) and $S(\mathcal{B}) = \int_B f\, dV$ is just the sum of each pixel's (or voxel's) gray value (see above). The area (if $d = 2$ or volume if $d = 3$) of $\mathcal{B}$ is denoted with $A(\mathcal{B})$. This principle for contour-to-image template matching is derived from the following theorem which is illustrated in Fig. 3(c).

**Theorem 1** *Confinement* Variational Principle. *Let £(f)$_I$ be the level section of an integrable function f:**R**$^d$→**R**$_{\geq 0}$, d = {2,3} and for a level l ∈* **R** *(then £(f)$_I$ is measurable). We set α = A(£(f)$_I$) (the area of £(f)$_I$ if d = 2).*

*Then, the mass m$_{£(f)_I}$ = S(£(f)$_I$) is maximal among all measurable subsets* $\mathcal{B}_\alpha$ *of* **R**$^d$ *with A($\mathcal{B}_\alpha$)=α.*

Theorem 1 holds also locally for all confiners $C$ for which $f$ does not reach a local minimum or saddle point on a contour point of $C$. The theorem leads directly to a template matching algorithm: For a region $\mathcal{B}$ (or for its contour) and by allowing only rigid transformations **r** the process of successively confining the maximal mass by the contour of $\mathcal{B}$ corresponds to an optimization of $S(\mathbf{r}(\mathcal{B}))$. If $\mathcal{B} = \tilde{\mathbf{r}}^{-1}(C)$ for a confiner $C$ of the target image then the optimization of $S(\mathbf{r}(\mathcal{B}))$ allows, according to the theorem, to correctly recover $\tilde{\mathbf{r}}$ and hence the location of $C$. Thus, $S$ is our similarity measure assessing how well $\mathbf{r}(\mathcal{B})$ fits into the target image. This principle of the invention is called *maximal mass confinement (MMC)* algorithm. For optimization, for example, in a first attempt Powell's Direction Set method is applied. The power of the MMC principle is illustrated in Fig. 3(c). In this example the similarity is monotonously increasing until the optimal confiner location is reached, even though there are different local minima and maxima of $f$ on the way to this optimal location, Due to this robustness the MMC algorithm is able to deal with structural differences in the confiners belonging to the two images.

Next, the selection of template regions is described. Often, the motion pattern in the images to be registered has a global component at some level of spatial resolution. Then, registering from coarse-to-fine allows a good initialization obtained from the result of coarse registration when starting the registration procedure at a finer level. According to an embodiment, two images are registered by selecting confiners in one image, the *source* image, and to register them successively by rigid template matching to the other image, the *target* image.

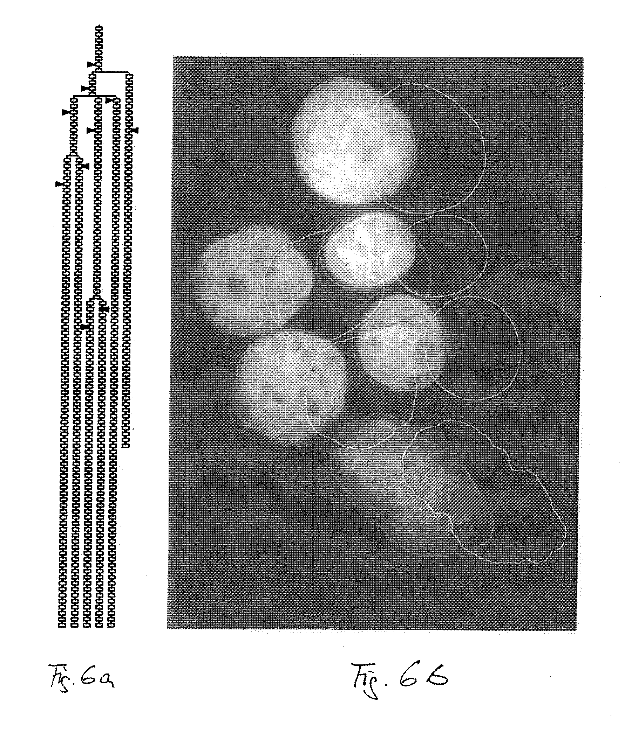

By the structure of the confinement tree, the confiners are organized in a hierarchical manner. According to an embodiment, a way of coarse-to-fine registration based on the confinement tree is to select the confiners hierarchically starting from the root and passing then recursively all branches originating from the first bifurcation after the root wherein the template matching process for a selected confiner of each branch is initialized by the transformation resulting from the matching process corresponding to the root, etc. The benefit of this strategy is illustrated in Figs. 6a and 6b. It leads to the following algorithm (Tsource denotes the confinement tree of the source image and Itarget denotes the target image; the rigid template matching algorithm in 3. has been presented above):

```
procedure register_branch(Node(Tsource), IntialTransform, Itarget) {
   1. go down branch from Node until next bifurcation or leaf,
      keep pointer to node N with highest area/contourLength ratio
   2. initialize confines CN of N with InitialTransform into Itarget
   3. register CN by rigid template matching to Itarget
   4. update InitialTransform by composition with transform of 3.
   if(leaf in 1.)
       {terminate}
   else {
      for each first node bN after bifurcation from 1. do {
          register_branch(bN,InitialTransform, Itarget)
      }
   }
}
 register_branch(root(Tsource), identity, Itarget)
```

Next, experimental evaluation is described. Thereto, the principle is evaluated on several real and synthetic image pairs and compare it with a registration strategy using normalized mutual information.

The MMC algorithm is compared with another template matching algorithm based on normalized mutual information. Equally, the hierarchical image registration strategy is compared with B-Spline based non-rigid registration using normalized mutual information. The evaluation is performed on real and simulated images in terms of robustness, accuracy and computation speed. It is shown that both, MMC template matching on its own and hierarchical image registration using MMC, in most cases outperform the respective alternative method.

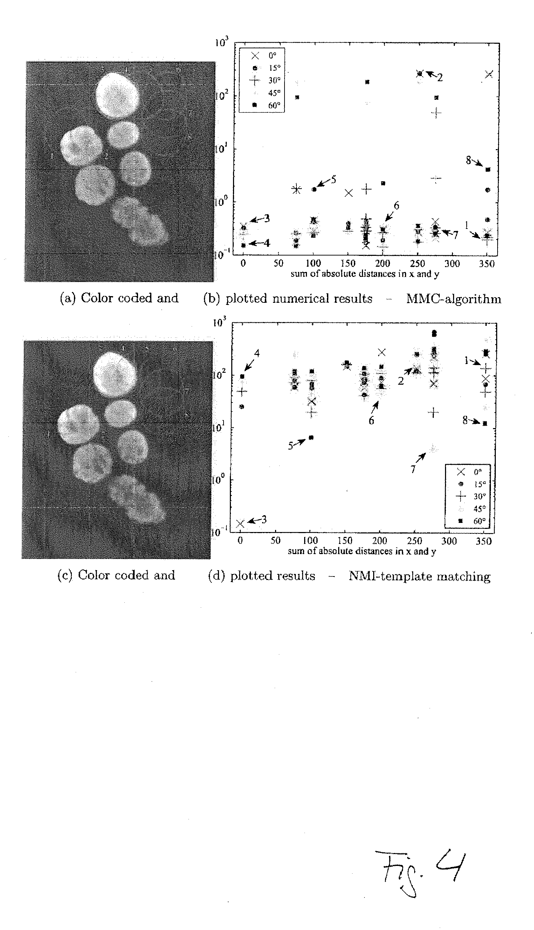

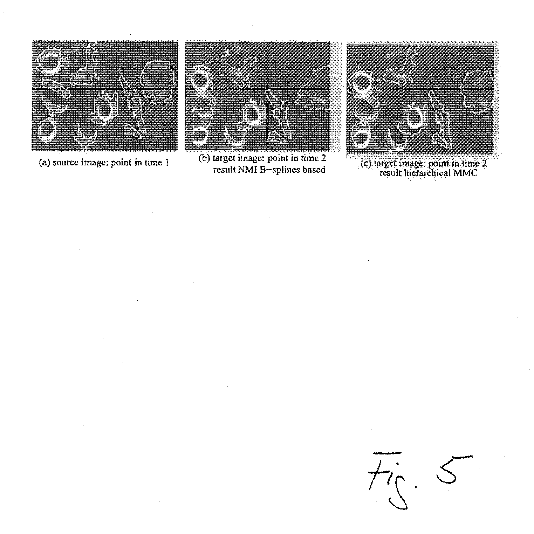

First, the MMC algorithm is evaluated on artificially displaced template contours as detailed in the next subsection. Second, the hierarchical image registration algorithm is evaluated on real microscopic images of entire cells as shown in Figs. 5a-5c which show movements occurring in between two different points in time, and of cell nuclei before and after applying a chemical procedure called Fluorescence in Situ Hybridisation as shown in Fig. 4.

Next, robustness, accuracy, and speed of MMC based on contour-to-image matching is described. The template matching algorithm described above is of interest on its own. Therefore, it has been evaluated separately from the current complete confinement tree based registration method proposed above. The MMC-algorithm is compared with an iconic registration algorithm, wherein mutual information based registration was proposed for iconic region-to-image template matching. Normalized mutual information (NMI) has been chosen as similarity measure and an image pyramid with different degrees of gaussian blurring for taken successively finer image details into account.

For the evaluation, the implementation available in the ITK library has been used.
Both above described algorithms have been applied to register rigidly a transformed confiner, as template region, back to the image from which the confiner has been extracted. The confiner has been taken corresponding to the upper most nucleus in the image presented in Fig. 4. Thereby, the confiner was used which is automatically selected during hierarchical confiner selection as described above.

Figure 4 illustrates in (a) and (c) the initial positions of the contour of the confiner template for selected initial transformations are shown. The error value is coded in color obtained after registering the template back to the (whole) initial image: green: error value < 1, yellow: 1 <= error value < 5, blue: 5 <= error value < 10, purple: <= 10 error value < 100, and red: error value <= 100; in (b) and (d): plotted error values (logarithmic scale) for each initial transformation where the translation is indicated by the sum of the absolute translational distances in x and in y and where the rotation is indicated by different symbols; a symbol with a number pointing to it corresponds to the respective initial position depicted in (a) and (c) and marked by the same number; here, the initial positions in (a) and (c) with the same numbers are identical.

In order to validate and compare robustness and accuracy, various different initializations of the template matching process obtained by transforming the selected confiner according to the following scheme are defined: The confiner is rotated around the geometric center of its contour by 0, 15, 30, 45 and 60 degrees and translated it by - 200, -100, 0, 100 and 200 pixels in x (horizontal) direction and -75, 0, 75, 150 pixels in y (vertical) direction. After, all 100 possible combinations of these values are taken in order to transform the confiner. Fig. 4 (a) and (c) depicts the positions of the transformed confiner's contour for selected initial transformations. For evaluating our maximal mass confinement algorithm we used only the contour of the confiner whereas for NMI template matching we kept the gray values of all pixels of the template confiner (the other pixel's gray values are set to zero).

The root mean square error of the pixel distances is quantified between corresponding points of the original confiner contour and the contour after registration. The error values are color coded according to the registration result for the selected initial transformations of the confiner, in Fig. 4 (a) for the MMC algorithm and in Fig. 4 (c) for NMI based template matching. According to the used color code, green corresponds to sub-pixel accuracy (a value below 1). In the plots in Figs. 4 (b) and (d) for each considered initial angle (different symbols) and for the different distances obtained by translation in x and y (horizontal axis) the resulting error value after registration is indicated. Visually, the quality of the result in the case of a green or a yellow line are difficult to distinguish.

The results show that the maximal mass confinement method works very accurately and also robustly. In 89 of 100 cases a very good or good (error value < 5) registration result was obtained among them 79 cases with sub-pixel accuracy.

In contrast, using NMI template matching only for the case of a perfect initialization (no transformation) sub-pixel accuracy was obtained. One further case lead to a good result (error value = 4.01) but in all other 98 cases a misregistration occurred.

A further benefit of the MMC approach results from the low computing costs compared to NMI template registration. Less than 1 sec of computation for complete template registration with MMC in case of the confiner template used in Fig. 4 compares to 1-2 min required for rigid NMI template registration.

Next, the comparison of the hierarchical registration algorithm proposed above with a typical non-rigid registration algorithm often used for motion analysis combining the use of normalized mutual information as similarity measure with bi-linear B-splines is discussed (Studholm, Hill, & Hawkes, 1999, An overlap invariant entropy measure of 3D medical image alignment, Pattern Recognition, 32, S. 71-86). The control points of the B-splines lay on the nodes of a regular grid and are inserted using a hierarchical scheme with 10 levels. Starting with 3 points per linearly independent coordinate axis (together 9 points), 2 control points per axis are inserted in each step until 21 points per axis (together 441 control points) are reached. The algorithm on the microscopic cell images depicted in Fig. 5 is evaluated.

Figure 5 illustrates microscopic cell images at two different points in time: Comparison of confinement tree based registration with NMI-B-spline-registration, Contour lines are shown to visualize the result, (a): source image, the contours correspond to the hierarchically selected confiners which are closest to the leaves of the filtered tree. (b,c): target image; (b) the contours are the transformed contours of (a), transformed by registration with the NMI-B-splines based algorithm; (c) the contours are the transformed ones of (a), transformed with our hierarchical MMC algorithm. Corresponding contours have the same numbers. Note the strong deformation of the contour in the upper left corner after NMI-B- spline-registration and the misregistration of all cells on the left hand side with this approach; they have been correctly transformed by the MMC algorithm.

In cases of strong local motion of the cells, the NMI-B-splines based approach failed and often strongly deformed cells whereas the MMC based algorithm still worked robustly. Moreover, the MMC based algorithm leads to a striking gain in computation time: Around 3 min are needed with the approach using NMI (with image pyramid, ITK application) and B-Splines compared to around 7 sec with the MMC based algorithm, which has still a big potential to be optimized with respect to its computation time.

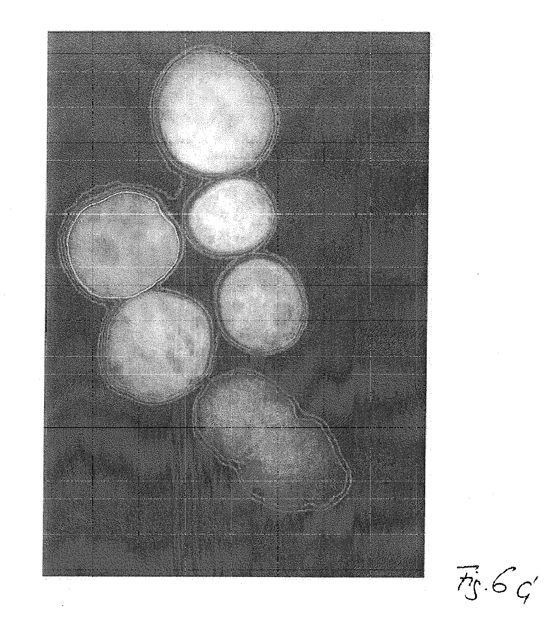

Figures 6a-6c illustrate the benefit of a hierarchical confiner selection. Figure 6a shows a confinement tree of the source image shown in Fig. 4. The original tree has been filtered by removing confiners with an excess mass below a given value which is adjusted such that the number of leaves in the tree corresponds to the number of nuclei in the image. The excess mass of a confiner is defined as its mass minus its area times its level. Figure 6b: Target image and contours corresponding to the last arrows before the leaves in the tree in (a), yellow after initial superimposition and red after direct MMC registration of the yellow contours to the target image. The registration of the confiner representing third nucleus from above fails. Figure 6c: The green contours in (c) are those indicated by the arrows in the tree in (a) when transformed with the transformation obtained by registering the largest contour - of the confiner selected at first by the algorithm - to the target image. The yellow contour shows the result of registering the corresponding green contour with the target image.

In summary, the present invention provides a new principle for contour-to-image registration, and a new maximal mass confinement (MMC) principle, from which the MMC procedure is derived and used as a basis for a new strategy of hierarchical rigid and locally rigid image registration. This strategy avoids problems associated to previous approaches looking for corresponding confiner pairs, which are sensitive to differences in both images due to noise or different conditions of image acquisition. Our evaluation and comparison with an iconic registration approach show a high accuracy and robustness with respect to such image differences. In particular, the procedure is able to deal with large local movements. It is simple to implement and further potential of the proposed approach results from its computational speed.

While the above has been described with reference to particular embodiments, those skilled in the art will recognize that other techniques may be used without departing from the spirit and scope of the invention as described herein.

**Claims**

1. Method for registration of image structures, comprising:

   providing a source image and a target image each comprising a plurality of pixels, wherein each pixels has a gray value;
   defining at least one gray value level;
   determining one or more first regions in the source image for each gray value level as confiners, wherein the first region comprises pixels having gray values equal to or higher than the gray value level;
   selecting one of the one or more determined first regions;
   determining at least one second region having a maximum mass in the target image wherein said mass is calculated from the sum of the gray values of all pixels of the second region and having an area corresponding to the selected respective first region, wherein said maximum mass has reached a maximum for at least one second region or a sum of one or more second regions.

2. The method according to claim 1, wherein the source and the target images are two-dimensional or three-dimensional images, respectively; wherein when the images are two-dimensional images a contour is determined for each first region and wherein when the images are three-dimensional images a surface is determined for each first region.

3. The method according to claim 1 or 2, further comprising generating a confinement tree wherein each of the one or more confiners of one gray value level defining nodes on the same level of the tree, the root is defined by the confiner at the first of the gray value levels.

4. The method according to one of the preceding claims, further comprising loping the confinement tree by removing nodes from the confinement tree.

5. The method according to one of the preceding claims, wherein determining second regions further comprises a mapping of the selected first region in the source image into the target image as second region by applying an initial geometric transformation, and selecting a region of the target image as the selected second region by further transforming the second region in the target image.

6. The method according to one of the preceding claims, wherein determining the maximum of the calculated masses comprises maximizing a cost function comprising a similarity measure, wherein the similarity to be maximized is defined as the mass of the region in the target image.

7. The method according to one of the preceding claims, wherein said regions of different confiners in the source image are registered independently from each other but their respective initial position depend on the position of the regions of other confiners.

8. The method according to one claims 3 to 7, wherein said at least one confiner is selected successively and hierarchically from the confinement tree of the source image, from its root down to its leaves, and wherein registration of each selected confiner by determining said second regions is initialized by the result obtained for the preceding confiner in the current confinement tree branch.

9. The method according to one of the preceding claims, wherein a common rigid or non-rigid transformation model and a common cost function is used to register several confiners, and, in particular, wherein this non-rigid transformation model is volume preserving in the case of 3D images or area preserving in the case of 2D images.

10. The method according to one of the preceding claims, wherein ranges of consecutive gray levels are considered and wherein for each such range a common transformation model and cost functional is used for all selected confiners in the considered range and wherein the registration process for a given range is initialized by the transformation obtained for the previous range with lower gray values.

11. The method according to one of the preceding claims, further comprising visualizing the selected first region and/or the selected second region on the target image.

12. The method according to one of the preceding claims, wherein the step of visualizing comprises visualizing the confiner, or an approximation of it, with smallest area, in case of a 2D image, or volume, in case of a 3D image, among all confiners of the loped confinement tree containing a given interactively or automatically determined point.

13. An apparatus for registration of image structures which is adapted to carry out a method according to one of the preceding claims.

14. A computer program containing computer program code which when executed on a data processing system carries out a method according to one of claims 1 to 12.

15. An electronic storage medium for storing executable program code which when executed on a data processing system carries out a method according to one of claims 1 to 12.

Fig. 1

EP 2 161 689 A1

Start

310

300

230

Initial
transformation

Initially transform confiner
contour to target image

Confiner
transformation

320

340

Confiner
contour

**Calculate mass of confiner
contour in target image**

140

350

370

Target image

Obtain new transformation by
performing one optimization
step (maximizing mass)

Transform confiner contour to
target image

360

transformation
converged to
maximum mass?

no

yes

End

Fig. 2

Fig. 3a

Fig. 3b

Fig. 3c'

(a) Color coded and    (b) plotted numerical results  –   MMC-algorithm

(c) Color coded and    (d) plotted results  –   NMI-template matching

Fig. 4

(a) source image: point in time 1

(b) target image: point in time 2
result NMI B−splines based

(c) target image: point in time 2
result hierarchical MMC

Fig. 5

Fig. 6a

Fig. 6b

Fig. 6 G'

Europäisches
Patentamt

European
Patent Office

Office européen
des brevets

## EUROPEAN SEARCH REPORT

**Application Number**

EP 09 16 9529

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MATTES J ET AL: "STRUCTURAL OUTLIER DETECTION FOR AUTOMATIC LANDMARK EXTRACTION" PROCEEDINGS OF THE SPIE - THE INTERNATIONAL SOCIETY FOR OPTICAL ENGINEERING, SPIE, US, vol. 4322, 1 January 2001 (2001-01-01), pages 602-610, XP008004522 ISSN: 0277-786X | 1-4,6-7, 9,11-15 | INV. G06T7/00 |
| Y | * abstract * <br> * Section 1; page 604, paragraph 1 * <br> * Section 2; page 603, paragraph 1 * <br> * page 603, paragraph 5 * <br> * figure 1 * <br> ----- | 5,8,10 | |
| Y | JULIAN MATTES ET AL: "Tree Representation and Implicit Tree Matching for a Coarse to Fine Image Matching Algorithm" 1 January 2006 (2006-01-01), MEDICAL IMAGE COMPUTING AND COMPUTER-ASSISTED INTERVENTION - MIC CAI'99 LECTURE NOTES IN COMPUTER SCIENCE;;LNCS, SPRINGER, BERLIN, DE, PAGE(S) 646 - 655 , XP019036217 ISBN: 9783540665038 * page 652, paragraph 1 * * Section 'Interpolation Point Pairs'; page 651 * * page 650, paragraph 1 * ----- | 5,8,10 | |
| A | US 2006/034545 A1 (MATTES JULIAN [AT] ET AL) 16 February 2006 (2006-02-16) * the whole document * ----- <br> -/-- | 1-15 | TECHNICAL FIELDS SEARCHED (IPC) <br><br> G06T |

The present search report has been drawn up for all claims

| Place of search | Date of completion of the search | Examiner |
|---|---|---|
| Munich | 16 December 2009 | Leclercq, Philippe |

EPO FORM 1503 03.82 (P04C01)

Europäisches
Patentamt

European
Patent Office

Office européen
des brevets

# EUROPEAN SEARCH REPORT

Application Number

EP 09 16 9529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | MATTES JULIAN AND DEMONGEOT JACQUES: "Efficient Algorithms to Implement the Confinement Tree" LECTURE NOTES IN COMPUTER SCIENCE (LNCS), vol. 1953/2000, 2000, XP002559913 DOI: 10.1007/3-540-44438-6_32 ISBN: 9783540413967 * the whole document * | 1-15 | |
| A | MATTES JULIAN, RICHARD MATHIEU AND DEMONGEOT JACQUES: "Tree Representation for Image Matching and Object Recognition" LECTURE NOTES IN COMPUTER SCIENCE (LNCS), vol. 1568/1999, 1999, pages 298-309, XP002559914 DOI: 10.1007/3-540-49126-0_23 * the whole document * | 1-15 | |
| X,P | JULIAN MATTES ET AL: "A Maximal Mass Confinement Principle for Rigid and Locally Rigid Image Registration" 6 September 2008 (2008-09-06), MEDICAL IMAGE COMPUTING AND COMPUTER-ASSISTED INTERVENTION Â MICCAI 2008; [LECTURE NOTES IN COMPUTER SCIENCE], SPRINGER BERLIN HEIDELBERG, BERLIN, HEIDELBERG, PAGE(S) 1058 - 1065 , XP019105141 ISBN: 9783540859895 * the whole document * | 1-15 | TECHNICAL FIELDS SEARCHED (IPC) |

The present search report has been drawn up for all claims

| Place of search | Date of completion of the search | Examiner |
|---|---|---|
| Munich | 16 December 2009 | Leclercq, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.....................................................................................................

& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 09 16 9529

This annex lists the patent family members relating to the patent documents cited in the above-mentioned European search report.
The members are as contained in the European Patent Office EDP file on
The European Patent Office is in no way liable for these particulars which are merely given for the purpose of information.

16-12-2009

| Patent document cited in search report | Publication date | Patent family member(s) | | Publication date |
|---|---|---|---|---|
| US 2006034545 A1 | 16-02-2006 | AU | 2002235939 A1 | 19-09-2002 |
|  |  | WO | 02071333 A2 | 12-09-2002 |
|  |  | EP | 1444654 A2 | 11-08-2004 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 08015612 A

### Non-patent literature cited in the description

- **B. Zitova ; J. Flusser.** Image registration methods: a survey. Elsevier. Image and Vison Computing, 2003, vol. 21, 977-1000
- **Pluim, Maintz ; Viergever.** *Mutual Information Based Registration of Medical Images: A Survey. IEEE Tr. Med. Im.,* 2003, vol. 22, 986-1004
- Comparing mammogram pairs for the detection of lesions. **Kok-Wiles ; Brady ; Highnam.** 4th Int. Workshop of Dig. Mammography. Kluwer, 1998
- Tree representation and implicit tree matching for a coarse to fine image matching algorithm. **Mattes ; Demongeot.** MICCAI. Springer-Verlag, 1999, vol. 99, 646-655
- **Studholm ; Hill ; Hawkes.** An overlap invariant entropy measure of 3D medical image alignment. *Pattern Recognition,* 1999, vol. 32, 71-86